# EUROPÄISCHE PATENTSCHRIFT

(11) **EP 3 537 122 B1**
(45) Veröffentlichungstag und Bekanntmachung des Hinweises auf die Patenterteilung: **16.06.2021**
(21) Anmeldenummer: 19161142.5
(22) Anmeldetag: 06.03.2019
(51) Int. Cl.: G01K 7/16

(54) **ELEKTRISCHER TEMPERATURFÜHLER**
ELECTRICAL TEMPERATURE SENSOR
SONDE DE TEMPÉRATURE ÉLECTRIQUE

(30) Priorität: 08.03.2018 DE 102018105400
(43) Veröffentlichungstag der Anmeldung: 11.09.2019
(73) Patentinhaber: TMC Sensortechnik GmbH, 75015 Bretten (DE)
(72) Erfinder: Radbruch, Jens, 75015 Bretten (DE); Siegwardt, Wilhelm, 76669 Bad Schönborn (DE); Vidovic, Adam, 76344 Eggenstein-Leopoldshafen (DE)
(74) Vertreter: Twelmeier Mommer & Partner

(56) Entgegenhaltungen:
- DE-A1- 10 158 529
- US-A1- 2004 218 662

## Beschreibung

Die Erfindung betrifft einen elektrischen Temperaturfühler mit den im Oberbegriff des Patentanspruchs 1 angegebenen Merkmalen. Ein Temperaturfühler mit den im Oberbegriff des Anspruchs 1 genannten Merkmalen ist aus DE 101 58 529 A1 sowie aus US 2004/0218662 A1 bekannt.

Ein ähnlicher Temperaturfühler ist durch Benutzung bekannt geworden. Der bekannte Temperaturfühler hat einen elektrisch isolierenden Träger aus einer Aluminiumoxidkeramik. Der Träger trägt eine elektrische Widerstandsschicht aus Platin, die durch Leiterbahnen mit zwei Kontaktschichten verbunden ist, mit denen weiterführende elektrische Leiter verlötet sind, welche an ein Temperaturüberwachungsgerät angeschlossen werden können. Die mit den Kontaktflächen verbundenen weiterführenden Leiter sind Blechstreifen, welche über den Rand des Trägers hinausragen und dort jeweils zu einer Klemme geformt sind, an welcher eine Litze durch Klemmen und/oder Löten befestigt werden kann.

Die Blechstreifen dienen nicht nur zum elektrischen Kontaktieren des Temperaturfühlers, sondern auch zum Halten des Trägers.

Ein typisches Anwendungsgebiet des bekannten Temperaturfühlers ist die Temperaturüberwachung einer Wicklung eines Elektromotors. Für diesen Einsatzzweck muss der Temperaturfühler so klein wie möglich und so zuverlässig wie möglich sein. Geringe Abmessungen werden benötigt, damit der Temperaturfühler beim Herstellen der Wicklung in diese eingefügt werden kann. Eine besondere Zuverlässigkeit wird gefordert, weil beim Ausfall des Temperaturfühlers dieser in aller Regel nicht als Einzelteil ausgetauscht werden kann, sondern zusammen mit dem Motor oder mindestens zusammen mit dessen Wicklung ausgetauscht werden muss. Eine typische Ausfallursache besteht darin, dass sich der keramische Träger von einem oder von beiden elektrischen Leitern, die ihn tragen, löst. Dieses Risiko besteht vor allen Dingen deshalb, weil bei den Einsatzbedingungen von Elektromotoren mit Vibrationen zu rechnen ist, die sich schädlich auf die Lötstellen auswirken.

Der vorliegenden Erfindung liegt die Aufgabe zugrunde, bei einem Temperaturfühler der eingangs genannten Art dessen Zuverlässigkeit auf möglichst einfache und platzsparende Weise zu verbessern.

Diese Aufgabe wird durch einen Temperaturfühler mit den im Patentanspruch 1 angegebenen Merkmalen gelöst. Vorteilhafte Weiterbildungen der Erfindung sind Gegenstand der abhängigen Ansprüche.

Der erfindungsgemäße Temperaturfühler hat einen elektrisch isolierenden Träger, der zum Beispiel aus einer Aluminiumoxidkeramik besteht und eine Vorderseite, eine Rückseite und einen Rand hat. Auf einer seiner Seiten, nachfolgend als seine Vorderseite bezeichnet, trägt der Träger eine elektrische Widerstandsschicht, welche leitend mit Kontaktschichten verbunden ist, die sich auf der Vorderseite oder auf der Rückseite des Trägers befinden. Um einen elektrischen Anschluss des Temperaturfühlers zu ermöglichen, sind die Kontaktschichten stoffschlüssig mit zwei elektrischen Leitern verbunden, insbesondere verlötet oder verschweißt, zum Beispiel mit einem Laserstrahl verschweißt. Diese elektrischen Leiter setzen sich an einem ersten Randabschnitt des Trägers über dessen Rand hinaus fort und können an ein Überwachungsgerät angeschlossen werden. Um die mechanische Verbindung des Trägers mit den elektrischen Leitern zu sichern, setzt sich wenigstens einer der mit den Kontaktschichten verbundenen Leiter außerdem an einem zweiten Randabschnitt des Trägers über dessen Rand hinaus fort. Der auf diese Weise gebildete Fortsatz des wenigstens einen Leiters ist in der Weise umgeschlagen, dass er wenigstens einen Teil des nicht umgeschlagenen Abschnitts des Leiters direkt oder indirekt überdeckt und dass wenigstens ein Teil des umgeschlagenen Abschnitts des Fortsatzes mit dem Träger verbunden ist.

Durch das Umschlagen und Verbinden des Fortsatzes mit dem Träger wird zusätzlich zu der bereits bestehenden elektrisch-mechanischen Verbindung der Leiter mit den beiden Kontaktschichten auf dem Träger eine weitere mechanische Verbindung zwischen dem wenigstens einen Fortsatz und dem Träger hergestellt, die die mechanische Verbindung zwischen dem Träger und den zwei Leitern verbessert und zugleich eine dauerhafte elektrische Verbindung zwischen den Leitern und den beiden Kontaktschichten und der elektrischen Widerstandsschicht sichert.

Dieser Vorteil der Erfindung wird dadurch ergänzt, dass der Aufwand zur Verwirklichung der zusätzlichen mechanischen Sicherung der Verbindung gering ist: Der elektrische Leiter muss lediglich ein Stück weit über den zweiten Randabschnitt des Trägers verlängert werden, damit ein Fortsatz gebildet werden kann, der umgeschlagen werden kann. Das Umschlagen des Fortsatzes ist ein einfacher Biegevorgang, der in einer automatisierten Fertigung leicht und reproduzierbar zu verwirklichen ist. Die Zunahme der Baugröße des Temperaturfühlers durch das Verlängern und Umschlagen der Leiter ist vernachlässigbar, was für den Einbau in eine elektrische Wicklung von Vorteil ist.

Vorzugsweise liegen die Kontaktschichten, mit denen die elektrischen Leiter stoffschlüssig verbunden werden, auf derselben Seite des Trägers wie die Widerstandsschicht. Dann kann der wenigstens eine Fortsatz so umgeschlagen werden, dass er auf der Rückseite des Trägers zu liegen kommt, die frei von aufgedruckten Leiterbahnen sein kann. Durch das Umschlagen des Fortsatzes kann eine Klammer gebildet werden, welche dem Träger einen zusätzlichen Halt gibt. Wenn, wie es bevorzugt ist, beide Kontaktschichten mit einem verlängerten Leiter verbunden sind, so dass zwei Fortsätze umgeschlagen werden können, dann wird die mechanische Halterung des Trägers noch weiter verbessert. Optimiert wird die Halterung des Trägers, wenn die Fortsätze nicht nur umgeschlagen, sondern auf der Rückseite des Trägers mit diesem stoffschlüssig verbunden werden, zum Beispiel durch Verkleben. Vorzugsweise wird der umgeschlagene Abschnitt der Fortsätze mit dem Träger aber verlötet. Das kann in einer automatisierten Fertigung, welche die SMD-Technik nutzt (SMD = Surface Mounted Device), ohne nennenswerten Aufwand erfolgen, weil die gleiche SMD-Technik auch für das Verbinden der beiden elektrischen Leiter mit den beiden Kontaktschichten durchgeführt werden kann. Die dafür benötigte Lotlegierung kann rationell auf die elektrischen Leiter aufgetragen werden, insbesondere dann, wenn diese Bestandteile eines metallischen Stanzgitters sind, welches für die Herstellung einer Serie gleicher Temperaturfühler benutzt wird und aus welchem die einzelnen Temperaturfühler nach ihrer Herstellung herausgetrennt werden.

Vorzugsweise liegt der zweite Randabschnitt des Trägers, über welchen die Leiterbahnen mit ihrem Fortsatz hinausragen, auf der dem ersten Randabschnitt des Trägers entgegengesetzten Seite des Trägers. Dann können die elektrischen Leiter geradlinig ausgebildet sein und die Fortsätze müssen nur noch umgeschlagen werden und der umgeschlagene Abschnitt eine gesonderte Verbindung mit dem Träger eingehen.

Die Erfindung eignet sich besonders für Temperaturfühler, in denen der elektrisch isolierende Träger eine rechteckige Platte ist. Grundsätzlich ist die Erfindung aber auch anwendbar auf Temperaturfühler, bei denen der elektrisch isolierende Träger nicht eine rechteckige Platte, sondern eine runde Scheibe ist.

In einer anderen Ausführungsform des erfindungsgemäßen Temperaturfühlers kann der zweite Randabschnitt, an welchem der Fortsatz umgeschlagen werden soll, mit dem ersten Randabschnitt, über welchen die Anschlussleitungen hinausragen und mit denen der Temperaturfühler an ein Überwachungsgerät angeschlossen werden kann, einen Winkel einschließen, insbesondere einen rechten oder annähernd rechten Winkel. Das ist eine Ausführungsform, die verwirklicht werden kann, wenn der Träger eine runde Scheibe ist. Besonders vorteilhaft ist eine solche Ausführungsform dann, wenn der isolierende Träger eine rechteckige Platte ist und wenn die beiden Leitungen, deren Fortsatz umgeschlagen werden soll, in entgegengesetzte Richtungen abgewinkelt sind, so dass die beiden Fortsätze um einander gegenüberliegende Ränder des Trägers umgeschlagen werden können und die Fortsätze den Träger von zwei Seiten her umgreifen. Das verleiht der Halterung eine besondere Sicherheit. Bei einem rechteckigen Träger empfiehlt es sich zu diesem Zweck, die beiden Leiter rechtwinklig abzubiegen. Es ist jedoch auch ein Abbiegen unter einem von 90° verschiedenen Winkel möglich, sofern die vorgegebene Länge des Trägers das zulässt.

In jedem Fall ist es bevorzugt, dass die Fortsätze so umgeschlagen werden, dass der jeweilige Leiter sowohl mit der Oberseite als auch mit der Rückseite fest verbunden werden kann und auch den Rand des Trägers berührt.

In einem anderen Ausführungsbeispiel der Erfindung ist wenigstens einer der Fortsätze in der Weise umgeschlagen, dass er auf sich selbst zu liegen kommt, ohne dass der Fortsatz des Leiters sowohl die Oberseite als auch die Rückseite des Trägers berührt. Vielmehr soll in dieser Ausführungsform der Erfindung das Ende des umgeschlagenen Fortsatzes nur den Rand des Trägers berühren und vorzugsweise Druck auf den Rand ausüben, um eine Klemmung des Trägers herbeizuführen. Auch in diesem Ausführungsbeispiel ist es vorteilhaft, den Fortsatz nicht nur umzuschlagen, sondern ihn auch mit sich selbst zu verlöten und auf diese Weise die beiden Schenkel des umgeschlagenen Fortsatzes zu vereinigen.

Diese Ausführungsform ist besonders dann vorteilhaft, wenn die vom Temperaturfühler abgehenden Leitungen am ersten Randabschnitt des Trägers gemeinsam in einen isolierenden Körper eingebettet sind, der zum Beispiel durch Umspritzen der Leiter mit einem Kunststoff gebildet sein kann und die Widerstandsschicht nicht bedecken soll. Vorzugsweise bedeckt der isolierende Körper weder die Oberseite noch die Rückseite des Trägers, grenzt aber an dessen ersten Randabschnitt an. In diesem Fall kann der Fortsatz, der in der Weise umgeschlagen ist, dass er auf sich selbst zu liegen kommt und mit seinem Ende den zweiten Randabschnitt des Trägers berührt, den Träger gegen den am gegenüberliegenden ersten Randabschnitt befestigten isolierenden Körper verspannen. Der sich dadurch ergebende zusätzliche Halt kann noch verbessert werden, wenn der Träger am zweiten Randabschnitt, wo er vom Ende des umgeschlagenen Fortsatzes berührt wird, einen Hinterschnitt hat, der im einfachsten Fall eine am Rand des Trägers ausgebildete Schräge sein kann, so dass das umgeschlagene Ende des Fortsatzes zwischen der Schräge auf der einen Seite und dem nicht umgeschlagenen Abschnitt des Fortsatzes auf der anderen Seite einen Formschluss eingeht, der den Halt des Trägers auf den Leitern zusätzlich sichert.

Eine weitere Möglichkeit, den Halt des Trägers zu verbessern, besteht darin, dass der isolierende Körper einen Fortsatz hat, der auf jener Seite des Trägers liegt, welche den Kontaktschichten abgewandt ist, mit welchen die Leiter verbunden, insbesondere verlötet, sind. Auf diese Weise ist der Träger auf der einen Seite an den Leitern befestigt und kann zwischen diesen und dem Fortsatz des isolierenden Körpers eingespannt sein. Dazu ist noch die Möglichkeit gegeben, den Träger so zu positionieren, dass er auch mit seinem ersten Randabschnitt am isolierenden Körper anliegt. Zudem verbessert der Fortsatz des isolierenden Körpers den Halt des Trägers auch dann, wenn nur einer oder keiner der Leiter einen Fortsatz hat, der um den Rand des Trägers umgeschlagen ist.

Eine weitere Möglichkeit, den Halt des Trägers zu verbessern, besteht darin, dass der isolierende Körper an seinem dem Träger benachbarten Ende zwei einander gegenüberliegende Fortsätze hat, zwischen welchen der Träger mit einem Abschnitt, welcher dem isolierenden Körper benachbart ist, derart angeordnet ist, dass die Fortsätze dem ihnen zugewandten Abschnitt des Randes des Trägers anliegen oder von diesem nur einen geringen Abstand aufweisen. Diese Fortsätze behindern eine seitliche Bewegung des Trägers in seiner Ebene und dienen dadurch der Sicherung der Lage des Trägers an dem isolierenden Körper. Der Abstand, den die Fortsätze von dem ihnen zugewandten Abschnitt des Randes des Trägers haben dürfen, ist so gering zu wählen, dass dieses Ziel erreicht wird, indem eine Seitwärtsbewegung des Trägers verhindert oder durch Anschlagen des Trägers an dem einen oder dem anderen Fortsatz wenigstens begrenzt wird. Diese beiden Fortsätze können mit Vorteil zusätzlich zu dem einen Fortsatz des isolierenden Körpers vorgesehen sein, der auf jener Seite des Trägers liegt, welche den Kontaktschichten abgewandt ist. Durch die Kombination der drei Fortsätze wird ein besonders zuverlässiger Halt des Trägers an dem isolierenden Körper erzielt.

Die beiden einander gegenüberliegenden Fortsätze können mit dem einen Fortsatz, der auf jener Seite des Trägers liegt, welche den Kontaktschichten abgewandt ist, einstückig verbunden sein. Dadurch bilden die drei Fortsätze eine besonders kompakte und stabile Einheit mit dem isolierenden Körper.

Bei der Widerstandsschicht kann es sich um einen Dickschichtwiderstand oder um einen Dünnschichtwiderstand handeln, wobei ein Dickschichtwiderstand bevorzugt ist. Die Widerstandsschicht kann aus einem Metall mit linearer Widerstands-Temperatur-Kennlinie wie z. B. Platin oder aus einem halbleitenden PTC- oder NTC-Material bestehen. Die Abkürzung PTC steht für einen positiven Temperaturkoeffizienten, die Abkürzung NTC für einen negativen Temperaturkoeffizienten des Widerstandsmaterials.

Ausführungsbeispiele der Erfindung sind in den beigefügten Zeichnungen dargestellt. In den verschiedenen Ausführungsbeispielen sind gleiche oder einander entsprechende Teile mit übereinstimmenden Bezugszahlen bezeichnet.
- Figur 1: ist eine Draufsicht auf die Oberseite eines ersten Ausführungsbeispiels des Temperaturfühlers,
- Figur 2: ist eine Seitenansicht des Temperaturfühlers aus Figur 1,
- Figur 3: ist eine Draufsicht auf die Rückseite des Temperaturfühlers aus Figur 1,
- Figur 4: ist eine Ansicht des Temperaturfühlers in Richtung des Pfeils A in Figur 1 gesehen,
- Figur 5: ist eine Draufsicht auf ein zweites Ausführungsbeispiel des Temperaturfühlers,
- Figur 6: ist eine Seitenansicht des Temperaturfühlers aus Figur 5,
- Figur 7: ist eine Draufsicht auf die Rückseite des Temperaturfühlers aus Figur 5,
- Figur 8: ist eine Ansicht des Temperaturfühlers in Richtung des Pfeils B in Figur 5 gesehen,
- Figur 9: ist eine Draufsicht auf die Oberseite eines dritten Ausführungsbeispiels des Temperaturfühlers,
- Figur 10: ist eine Seitenansicht des Temperaturfühlers aus Figur 9,
- Figur 11: ist eine Draufsicht auf die Rückseite des Temperaturfühlers aus Figur 9,
- Figur 12: ist eine Ansicht des Temperaturfühlers in Richtung des Pfeils C in Figur 9 gesehen,
- Figur 13: ist eine Draufsicht auf die Rückseite eines vierten Ausführungsbeispiels des Temperaturfühlers,
- Figur 14: ist eine Seitenansicht des Temperaturfühlers aus Figur 13,
- Figur 15: ist eine Draufsicht auf die Oberseite des Temperaturfühlers aus Figur 13,
- Figur 16: ist eine Ansicht des Temperaturfühlers in Richtung des Pfeils D in Figur 13 gesehen,
- Figur 17: ist eine Draufsicht auf die Oberseite einer Abwandlung des ersten Ausführungsbeispiels des Temperaturfühlers,
- Figur 18: ist eine Seitenansicht des Temperaturfühlers aus Figur 17,
- Figur 19: ist eine Draufsicht auf die Rückseite des Temperaturfühlers aus Figur 17, und
- Figur 20: ist eine Ansicht des Temperaturfühlers in Richtung des Pfeils A in Figur 1 gesehen.

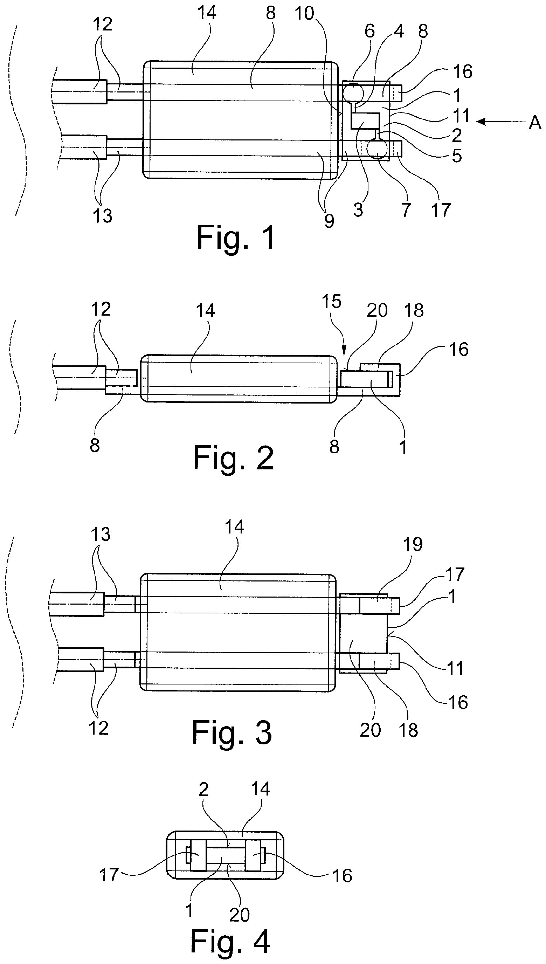

Der in den Figuren 1 bis 4 dargestellte Temperaturfühler hat einen elektrisch isolierenden Träger 1 in Gestalt einer rechteckigen Aluminiumoxidkeramikplatte, auf deren Vorderseite 2 eine elektrische Widerstandsschicht 3 vorgesehen ist, welche durch Leiterbahnen 4 und 5 mit zwei Kontaktschichten 6 und 7 verbunden ist. Ein elektrischer Leiter 8 in Gestalt eines Blechstreifens ist mit der Kontaktschicht 6 verlötet. Ein elektrischer Leiter 9 in Gestalt eines Blechstreifens ist mit der Kontaktschicht 7 verlötet. Die beiden Leiter 8 und 9 bestehen aus einem Metall oder einer Metalllegierung mit guter elektrischer Leitfähigkeit, zum Beispiel aus Neusilber.

Die beiden Leiter 8 und 9 verlaufen parallel zueinander, setzen sich an einem ersten Randabschnitt 10 des Trägers 1 über dessen Rand hinaus fort und sind an ihrem Ende mit zwei mit einem isolierenden Mantel versehenen elektrischen Leitungen 12 und 13 verbunden, bei denen es sich zum Beispiel um Litzen handeln kann. Diese elektrischen Leitungen 12 und 13 können zum Beispiel, wie in Figur 2 angedeutet, mit den Enden der Leiter 8 bzw. 9 verlötet sein.

Die Leiter 8 und 9 sind zwischen dem Träger 1 und den Leitungen 12 und 13 in einen isolierenden Körper 14 eingebettet, der zum Beispiel aus Kunststoff besteht und durch Spritzgießen hergestellt sein kann. Die Enden der Leiter 8 und 9, welche mit den Leitungen 12 und 13 verbunden sind, liegen außerhalb des Körpers 14. Zwischen dem isolierenden Körper 14 und dem Träger 1 kann ein Spalt 15 vorgesehen sein; das ist jedoch nicht zwingend, es kann auch vorteilhaft sein, wenn der Körper 14 spaltfrei oder annähernd spaltfrei an den Träger 1 angrenzt.

Die Leiter 8 und 9 setzen sich über einen zweiten Randabschnitt 11 des Trägers 1, welcher dem ersten Randabschnitt 10 des Trägers 1 abgewandt ist, fort. Die dadurch gebildeten Fortsätze 16 und 17 der Leiter 8 und 9 sind am zweiten Randabschnitt 11 umgeschlagen, wie es in Figur 2 dargestellt ist, so dass die Leiter 8 und 9 mit ihren Fortsätzen 16 und 17 den zweiten Randabschnitt 11 umgreifen, wobei die umgeschlagenen Abschnitte 18 und 19 auf der Vorderseite 2 des Trägers 1 zu liegen kommen und vorzugsweise mit der Vorderseite 2 des Trägers 1 verlötet werden.

Auf diese Weise ist die Lage des Trägers 1 auf den Leitern 8 und 9 mehrfach gesichert, nämlich erstens durch Verlöten der Leiter 8 und 9 mit den Kontaktschichten 6 und 7, zweitens durch Verlöten der Abschnitte 18 und 19 der Leiter 8 und 9 mit der Vorderseite 2 des Trägers 1, drittens dadurch, dass die Fortsätze 16 und 17 der Leiter 8 und 9 den zweiten Randabschnitt 11 des Trägers 1 umgreifen, und viertens dadurch, dass der isolierende Körper 14 den ersten Randabschnitt 10 des Trägers 1 schützt, insbesondere dann, wenn dieser unmittelbar am Körper 14 anliegt.

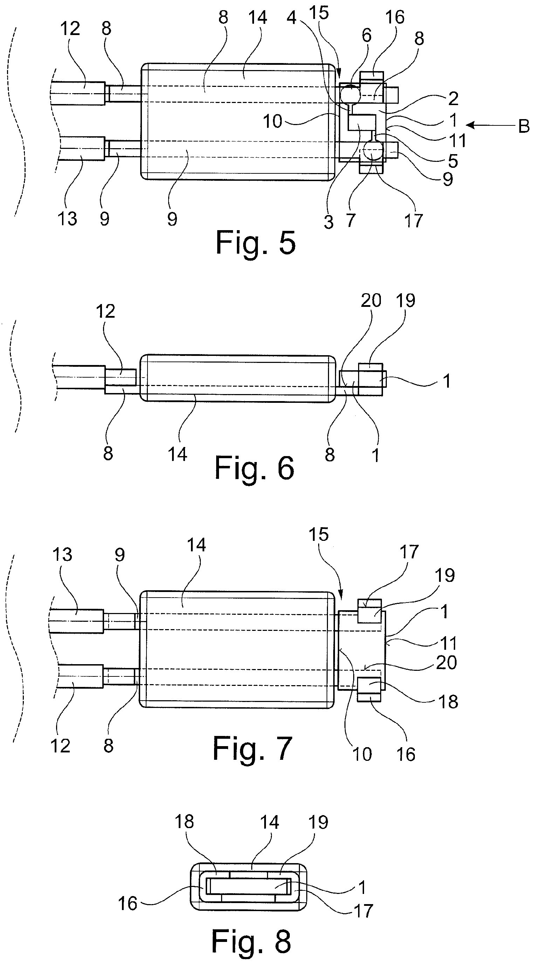

Das in den Figuren 5 bis 8 dargestellte Ausführungsbeispiel unterscheidet sich von dem in den Figuren 1 bis 4 dargestellten Ausführungsbeispiel darin, dass die Fortsätze 16 und 17 der beiden Leiter 8 und 9 sich in der Draufsicht gemäß Figur 5 unter einem Winkel von 90° gegenüber dem Abschnitt des Leiters 8, 9, welcher in den isolierenden Körper 14 eingebettet ist, über die beiden dem ersten Randabschnitt 10 benachbarten Randabschnitte des Trägers 1 hinaus erstrecken und um diese herum umgeschlagen sind, so dass die beiden Enden der umgeschlagenen Fortsätze 16 und 17, wie in Figur 8 gezeigt, einander gegenüberliegen. Wie im ersten Ausführungsbeispiel liegen die umgeschlagenen Abschnitte 18 und 19 auf der Rückseite 20 des Trägers 1 und können dort mit dem Träger 1 verlötet sein.

Auch in diesem Ausführungsbeispiel ist die Lage des Trägers 1 mehrfach gesichert, nämlich erstens dadurch, dass die Leiter 8 und 9 mit den Kontaktschichten 6 und 7 verlötet sind, zweitens dadurch, dass die Fortsätze 16 und 17 der Leiter 8 und 9 den Träger 1 an gegenüberliegenden Rändern umgreifen, und drittens dadurch, dass die umgeschlagenen Abschnitte 18 und 19 der Fortsätze 16 und 17 mit der Rückseite des Trägers 20 verlötet sind.

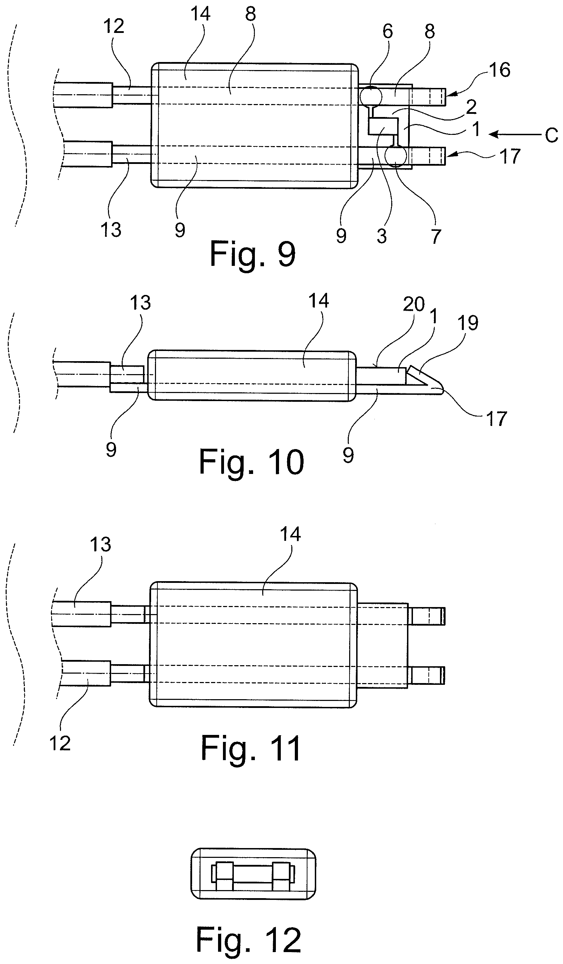

Das in den Figuren 9 bis 12 dargestellte Ausführungsbeispiel unterscheidet sich von dem in den Figuren 1 bis 4 dargestellten Ausführungsbeispiel darin, dass der Träger 1 unmittelbar dem isolierenden Körper 14 anliegt und die Fortsätze 16 und 17 der beiden Leiter 8 und 9 zwar umgeschlagen sind, mit ihren Enden aber lediglich den zweiten Randabschnitt 11 des Trägers 1 berühren. Im vorliegenden Beispiel beträgt der Winkel, den der umgeschlagene Abschnitt 18 bzw. 19 mit dem nicht umgeschlagenen Teil des Fortsatzes 16 bzw. 17 des Leiters 8 bzw. 9 einschließt, ungefähr 30°, so dass das Ende des umgeschlagenen Abschnitts 18 bzw. 19 mit einer Kante auf den zweiten Randabschnitt 11 des Trägers 1 einwirkt. Durch Druck auf die umgeschlagenen Abschnitte 18 und 19 in einer Richtung zur Verkleinerung des Winkels kann ein Druck auf den zweiten Randabschnitt 11 des Trägers 1 ausgeübt werden, so dass dieser zwischen den umgeschlagenen Abschnitten 18 und 19 und dem isolierenden Körper 14 eingespannt wird. Der Druck kann insbesondere dadurch aufrechterhalten werden, dass für die Leiter 8 und 9 ein Material gewählt wird, welches eine schlechte Federeigenschaft hat wie z. B. Neusilber.

Auch in diesem Ausführungsbeispiel ist der Träger 1 in seiner Lage mehrfach gesichert, nämlich erstens durch Verlöten der Leiter 8 und 9 mit den Kontaktschichten 6 und 7, und zweitens durch das Verspannen des Trägers zwischen den Enden der umgeschlagenen Abschnitte 18 und 19 und dem isolierenden Körper 14.

Das in den Figuren 9 bis 12 dargestellte Ausführungsbeispiel kann dadurch abgewandelt werden, dass man die umgeschlagenen Abschnitte 18 und 19 etwas verkürzt, und zwar so, dass die umgeschlagenen Abschnitte 18 und 19 auf dem nicht umgeschlagenen Abschnitt des Fortsatzes 16 bzw. 17 zu liegen kommen und mit ihrem Ende am zweiten Randabschnitt 11 des Trägers 1 anliegen. Ergänzend können die umgeschlagene Abschnitte 18 und 19 mit dem jeweiligen nicht umgeschlagenen Abschnitt des Leiters 8 bzw. 9 und/oder mit dem zweiten Randabschnitt 11 des Trägers 1 verlötet werden. Auch in diesem Fall ist die Lage des Trägers 1 mehrfach gesichert, nämlich erstens durch das Verlöten der Leiter 8 und 9 mit den Kontaktschichten 6 und 7, zweitens durch das Verspannen des Trägers 1 zwischen dem isolierenden Körper 14 und den Enden der umgeschlagenen Abschnitte 18 und 19 der Fortsätze 16 und 17 und drittens gegebenenfalls durch Verlöten der Enden der Abschnitte 18 und 19 mit dem zweiten Randabschnitt 11 des Trägers 1.

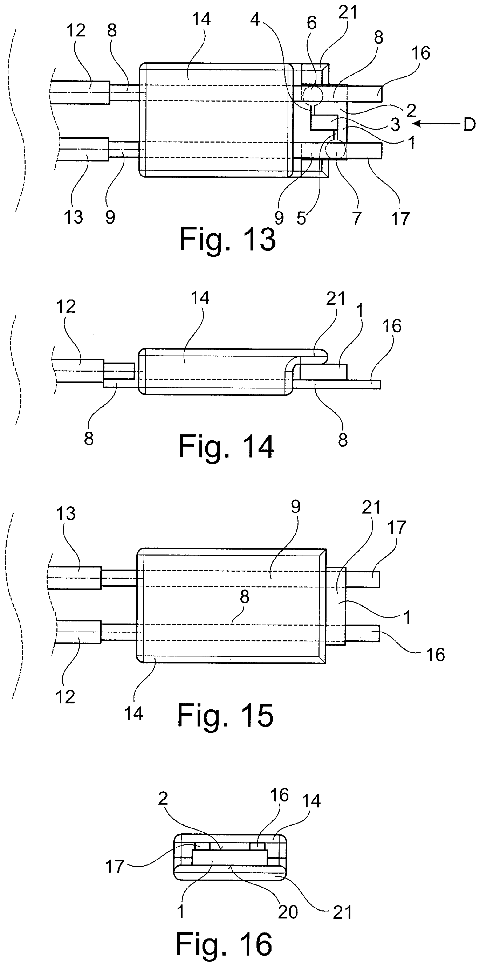

Das in den Figuren 13 bis 16 dargestellte Ausführungsbeispiel unterscheidet sich von dem in den Figuren 1 bis 4 dargestellten Ausführungsbeispiel darin, dass der isolierende Körper 14 einen Fortsatz 21 hat, welcher sich ein Stück weit über die Rückseite 20 des Trägers 1 erstreckt, so dass dieser zwischen den beiden Leitern 8 und 9 auf der einen Seite und dem Fortsatz 21 des isolierenden Körpers 14 auf der anderen Seite gehalten ist, wodurch der Träger 1 zusätzlich zu der Verlötung der beiden Leiter 8 und 9 mit den Kontaktschichten 6 und 7 gehalten ist.

Die Figuren 13 bis 15 zeigen, dass sich die Leiter 8 und 9 über den zweiten Randabschnitt 11 des Trägers 1 hinaus fortsetzen. Diese Fortsätze 16 und 17 müssen nicht vorhanden sein, weil bereits der Fortsatz 21 des Körpers 14 einen Beitrag zum Halten des Trägers 1 liefert. Die Fortsätze 16 und 17 sind aber mit Vorteil vorgesehen, denn sie können wie im ersten Ausführungsbeispiel um den zweiten Randabschnitt 11 umgeschlagen werden, wie es in den Figuren 1 bis 3 dargestellt ist. Diese Variante verknüpft die durch den Fortsatz 21 des isolierenden Körpers 14 erreichte zusätzliche Sicherung der Lage des Trägers mit den Vorteilen des in den Figuren 1 bis 4 dargestellten ersten Ausführungsbeispiels.

In der Darstellung der Figuren 13 und 14 ist zwischen dem ersten Randabschnitt 10 des Trägers 1 und dem Körper 14 noch ein Spalt vorgesehen. Dieser kann vermieden werden, indem beim Einbetten der Leiter 8 und 9 darauf geachtet wird, dass der Körper 14 unmittelbar an den Träger 1 anschließt. Dadurch wird der Halt des Trägers 1 nochmals verbessert.

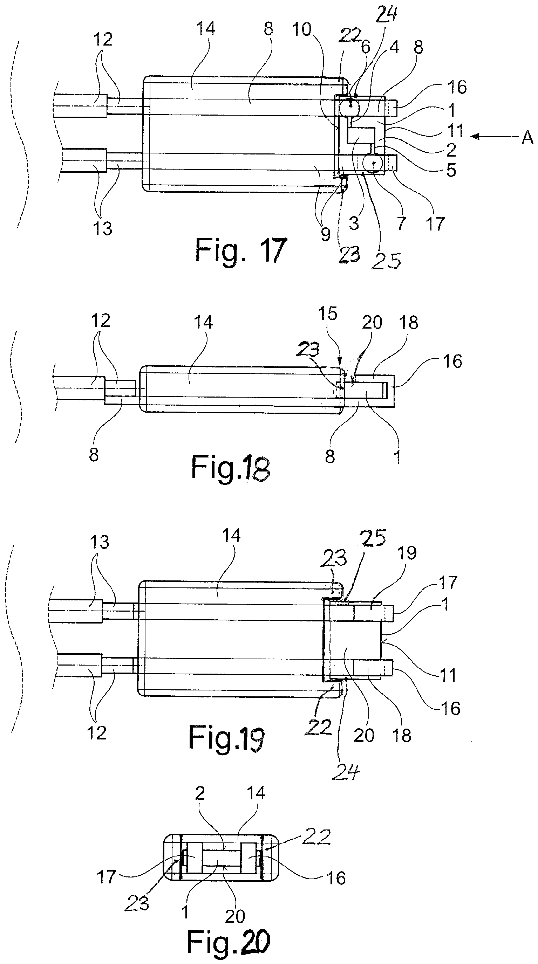

Das in den Figuren 17 bis 20 dargestellte Ausführungsbeispiel unterscheidet sich von dem in den Figuren 1 bis 4 dargestellten Ausführungsbeispiel darin, dass an jenem Ende des isolierenden Körpers 14, welches dem Träger 1 benachbart ist, in der Darstellung der Figuren 17 und 19 seitlich zwei Fortsätze 22 und 23 vorgesehen sind, welche sich, wie in den Figuren 18 und 20 dargestellt, über die gesamte Höhe des isolierenden Körpers 14 erstrecken können. Wie in den Figuren 17, 19 und 20 dargestellt ist, ist der Abstand zwischen den beiden seitlichen Fortsätzen 22 und 23 derart auf die Breite des Trägers 1 abgestimmt, dass die einander zugewandten Flächen der seitlichen Fortsätze 22 und 23 je einem Abschnitt 24, 25 der beiden den Fortsätzen 22 und 23 zugewandten Ränder 24 und 25 des Trägers 1 anliegen oder allenfalls einen geringen Abstand von diesen aufweisen. In Kombination mit den umgeschlagenen Leiterbahnen 4 und 5 ergibt sich dadurch für den Träger 1 ein guter Halt am isolierenden Körper 14.

### Bezugszeichenliste

- 1: Träger
- 2: Vorderseite
- 3: Widerstandsschicht
- 4: Leiterbahn
- 5: Leiterbahn
- 6: Kontaktschicht
- 7: Kontaktschicht
- 8: Leiter
- 9: Leiter
- 10: erster Randabschnitt
- 11: zweiter Randabschnitt
- 12: Leitung
- 13: Leitung
- 14: isolierender Körper
- 15: Spalt
- 16: Fortsatz
- 17: Fortsatz
- 18: Abschnitt
- 19: Abschnitt
- 20: Rückseite
- 21: Fortsatz von 14
- 22: seitlicher Fortsatz von 14
- 23: seitlicher Fortsatz von 14
- 24: seitlicher Rand von 1
- 25: seitlicher Rand von 1

- A: Pfeil
- B: Pfeil
- C: Pfeil
- D: Pfeil

## Patentansprüche

1. Elektrischer Temperaturfühler mit einem elektrisch isolierenden Träger (1), der eine Vorderseite (2), eine Rückseite (20) und einen Rand hat, und auf seiner Vorderseite (2) eine elektrische Widerstandsschicht (3) trägt, welche leitend mit zwei Kontaktschichten (6, 7) verbunden ist, die sich auf der Vorderseite (2) oder auf der Rückseite (20) des Trägers (1) befinden und, um einen elektrischen Anschluss des Temperaturfühlers zu ermöglichen, leitend mit zwei elektrischen Leitern (8, 9) verbunden sind, welche auf dem Träger (1) befestigt sind und sich an einem ersten Randabschnitt (10) des Trägers (1) über dessen Rand hinaus fortsetzen, wobei
sich wenigstens einer der mit den Kontaktschichten (6, 7) verbundenen Leiter (8, 9) außerdem an einem zweiten Randabschnitt (11) des Trägers (1) über dessen Rand hinaus fortsetzt,
der wenigstens eine auf diese Weise gebildete Fortsatz (16, 17) in der Weise umgeschlagen ist, dass er wenigstens einen Teil des nicht umgeschlagenen Abschnitts des Leiters (8, 9) überdeckt,
wenigstens der umgeschlagene Abschnitt (18, 19) des Fortsatzes (16, 17) gesondert mit dem Träger (1) verbunden ist, und
der umgeschlagene Abschnitt (18, 19) des wenigstens einen Fortsatzes (16, 17) mit jener Seite (20) des Trägers (1) verbunden ist, welche den Kontaktschichten (6, 7) abgewandt ist, **dadurch gekennzeichnet, dass** wenigstens einer der umgeschlagenen Abschnitte (18, 19) der Fortsätze (16, 17) stoffschlüssig mit dem Träger (1) verbunden ist.

2. Temperaturfühler nach Anspruch 1, **dadurch gekennzeichnet, dass** die Kontaktschichten (6, 7) auf derselben Seite des Trägers (1) liegen wie die Widerstandschicht (3).

3. Temperaturfühler nach einem der vorstehenden Ansprüche, **dadurch gekennzeichnet, dass** wenigstens einer der umgeschlagenen Abschnitte (18, 19) der Fortsätze (16, 17) mit dem Träger (1) verlötet, ist.

4. Temperaturfühler nach einem der vorstehenden Ansprüche, **dadurch gekennzeichnet, dass** der zweite Randabschnitt (11) des Trägers (1) dem ersten Randabschnitt (10) des Trägers (1) entgegengesetzt liegt.

5. Temperaturfühler nach einem der Ansprüche 1 bis 3, **dadurch gekennzeichnet, dass** der zweite Randabschnitt (11) mit dem ersten Randabschnitt (10) einen Winkel, insbesondere einen rechten oder annähernd rechten Winkel, einschließt.

6. Temperaturfühler nach Anspruch 5, **dadurch gekennzeichnet, dass** der erste und der zweite Randabschnitt (10, 11) einander benachbart sind.

7. Temperaturfühler nach Anspruch 5 oder 6, **dadurch gekennzeichnet, dass** der Fortsatz (16, 17) wenigstens eines der Leiter (8, 9) mit demjenigen Abschnitt des Leiters (8, 9), welcher auf jener Seite des Trägers (1) liegt, auf welcher er mit der Kontaktschicht (6, 7) verlötet ist, einen Winkel einschließt, insbesondere einen rechten oder annähernd rechten Winkel.

8. Temperaturfühler nach einem der vorstehenden Ansprüche, **dadurch gekennzeichnet, dass** wenigstens einer der Fortsätze (16, 17) in der Weise umgeschlagen ist, dass er den Rand des Trägers (1) umgreift.

9. Temperaturfühler nach einem der Ansprüche 1, 2 und 4 bis 7, **dadurch gekennzeichnet, dass** wenigstens einer der Fortsätze (16, 17) in der Weise umgeschlagen ist, dass er auf sich selbst liegt und mit seinem Ende den zweiten Randabschnitt (11) des Trägers (1) berührt.

10. Temperaturfühler nach Anspruch 9, **dadurch gekennzeichnet, dass** der oder die Fortsätze (16, 17) mit sich selbst verlötet ist bzw. sind.

11. Temperaturfühler nach Anspruch 9 oder 10, **dadurch gekennzeichnet, dass** der Rand des Trägers (1) am zweiten Randabschnitt (11), wo er vom Ende eines umgeschlagenen Fortsatzes (16, 17) berührt wird, einen Hinterschnitt hat.

12. Temperaturfühler nach Anspruch 11, **dadurch gekennzeichnet, dass** der Hinterschnitt eine Schräge ist.

13. Temperaturfühler nach einem der vorstehenden Ansprüche, **dadurch gekennzeichnet, dass** die Fortsätze (16, 17) der zwei elektrischen Leiter (8, 9) in gleicher Weise umgeschlagen und mit dem Träger (1) verbunden sind.

14. Temperaturfühler nach einem der vorstehenden Ansprüche, **dadurch gekennzeichnet, dass** die Leiter (8, 9) Blechstreifen von gleichbleibender Dicke sind.

15. Temperaturfühler nach einem der vorstehenden Ansprüche, **dadurch gekennzeichnet, dass** die Widerstandsschicht (3) aus einem Metall mit linearer Widerstand-Temperatur-Kennlinie wie z. B. Platin oder aus einem halbleitenden PTC- oder NTC-Material besteht.

16. Temperaturfühler nach einem der vorstehenden Ansprüche, **dadurch gekennzeichnet, dass** die zwei Leiter (8, 9) in der Nachbarschaft des ersten Randabschnitts (10) des Trägers (1) oder an den ersten Randabschnitt (10) angrenzend gemeinsam in einen elektrisch isolierenden Körper (14) eingebettet sind.

17. Temperaturfühler nach Anspruch 16, **dadurch gekennzeichnet, dass** der isolierende Körper (14) einen Fortsatz (21) hat, der auf jener Seite (20) des Trägers (1) liegt, welche den mit den Leitern (8, 9) verbundenen Kontaktschichten (6, 7) abgewandt ist.

## Claims

1. An electric temperature sensor, comprising an electrically insulating carrier (1), which has a front side (2), a rear side (20) and an edge and, on the front side (2) thereof, carries an electrical resistance layer (3), which is connected in a conducting manner to two contact layers (6, 7) which are located on the front side (2) or on the rear side (20) of the carrier (1) and, so as to enable an electrical connection of the temperature sensor, connected in a conducting manner to two electrical conductors (8, 9), which are attached to the carrier (1) and continue at a first edge section (10) of the carrier (1) beyond the edge thereof,
at least one of the conductors (8, 9) that are connected to the contact layers (6, 7) additionally continuing at a second edge section (11) of the carrier (1) beyond the edge thereof,
the at least one extension (16, 17) thus formed being folded over so as to at least cover a portion of the section of the conductor (8, 9) that is not folded over,
at least the folded-over section (18, 19) of the extension (16, 17) being separately connected to the carrier (1), and
the folded-over section (18, 19) of the at least one extension (16, 17) being connected to the side (20) of the carrier (1) which faces away from the contact layers (6, 7), **characterized in that**
at least one of the folded-over sections (18, 19) of the extensions (16, 17) is integrally joined to the carrier (1).

2. Temperature sensor according to claim 1, **characterized in that** the contact layers (6, 7) are located on the same side of the carrier (1) as the resistance layer (3).

3. A temperature sensor according to any one of the preceding claims, **characterized in that** at least one of the folded-over sections (18, 19) of the extensions (16, 17) is soldered to the carrier (1).

4. A temperature sensor according to any one of the preceding claims, **characterized in that** the second edge section (11) of the carrier (1) is located opposite the first edge section (10) of the carrier (1).

5. A temperature sensor according to any one of claims 1 to 3, **characterized in that** the second edge section (11) includes an angle, in particular a right or approximately right angle, with the first edge section (10).

6. The temperature sensor according to claim 5, **characterized in that** the first and second edge sections (10, 11) adjoin one another.

7. The temperature sensor according to claim 5 or 6, **characterized in that** the extension (16, 17) of at least one of the conductors (8, 9) includes an angle, in particular a right or approximately right angle, with the section of the conductor (8, 9) that is located on the side of the carrier (1) on which the carrier is soldered to the contact layer (6, 7).

8. A temperature sensor according to any one of the preceding claims, **characterized in that** at least one of the extensions (16, 17) is folded over so as to surround the edge of the carrier (1).

9. A temperature sensor according to any one of claims 1, 2 and 4 to 7, **characterized in that** at least one of the extensions (16, 17) is folded over so as to be located on itself and, with one end thereof, make contact with the second edge section (11) of the carrier (1).

10. The temperature sensor according to claim 9, **characterized in that** the extension or extensions (16, 17) is or are soldered to itself or themselves.

11. The temperature sensor according to claim 9 or 10, **characterized in that** the edge of the carrier (1) has an undercut at the second edge section (11) where the end of a folder-over extension (16, 17) makes contact with it.

12. The temperature sensor according to claim 11, **characterized in that** the undercut is a chamfer.

13. A temperature sensor according to any one of the preceding claims, **characterized in that** the extensions (16, 17) of the two electrical conductors (8, 9) are folded over in the same manner and connected to the carrier (1).

14. A temperature sensor according to any one of the preceding claims, **characterized in that** the conductors (8, 9) are sheet metal strips having a consistent thickness.

15. A temperature sensor according to any one of the preceding claims, **characterized in that** the resistance layer (3) is made of a metal having a linear resistance-temperature characteristic curve, such as platinum or a semi-conducting PTC or NTC material.

16. A temperature sensor according to any one of the preceding claims, **characterized in that** the two conductors (8, 9), in the vicinity of the first edge section (10) of the carrier (1) or abutting the first edge section (10), are jointly embedded into an electrically insulating body (14).

17. The temperature sensor according to claim 16, **characterized in that** the insulating body (14) comprises an extension (21), which is located on the side (20) of the carrier (1) that faces away from the contact layers (6, 7) connected to the conductors (8, 9).

## Revendications

1. Capteur de température électrique avec un support (1) électriquement isolant qui possède une face avant (2), une face arrière (20) et un bord, et qui porte une couche de résistance électrique (3) sur sa face avant (2), laquelle est reliée de manière conductrice avec deux couches de contact (6, 7) qui se trouvent sur la face avant (2) ou sur la face arrière (20) du support (1), et, afin de permettre une connexion électrique du capteur de température, sont reliées de manière conductrice avec deux conducteurs électriques (8, 9), lesquels sont fixés sur le support (1) et se prolongent au niveau d'un premier segment de bord (10) du support (1) au-delà de son bord, où au moins un des conducteurs (8, 9) relié avec les couches de contact (6, 7) se prolonge en outre au niveau d'un deuxième segment de bord (11) du support (1) au-delà de son bord,
l'au moins une extension (16, 17) formée de cette manière est repliée de façon à qu'elle recouvre au moins une partie du segment du conducteur (8, 9) non replié,
au moins le segment (18, 19) replié de l'extension (16, 17) est relié de manière séparée avec le support (1), et
le segment (18, 19) replié de l'au moins une extension (16, 17) est relié avec le côté (20) en question du support (1), lequel est opposé aux couches de contact (6, 7), **caractérisé en ce**
**qu'**au moins un des segments (18, 19) repliés des extensions (16, 17) est relié avec le support (1) par connexion des matières.

2. Capteur de température selon la revendication 1, **caractérisé en ce que** les couches de contact (6, 7) se situent sur la même face du support (1) que le couche de résistance (3).

3. Capteur de température selon l'une des revendications précédentes, **caractérisé en ce qu'**au moins un des segments (18, 19) repliés des extensions (16, 17) est soudé avec le support (1).

4. Capteur de température selon l'une des revendications précédentes, **caractérisé en ce que** le deuxième segment de bord (11) du support (1) est posé dans le sens opposé par rapport au premier segment de bord (10) du support (1).

5. Capteur de température selon l'une des revendications 1 à 3, **caractérisé en ce que** le deuxième segment de bord (11) forme un angle, notamment un angle droit ou un angle proche d'un angle droit, avec le premier segment de bord (10).

6. Capteur de température selon la revendication 5, **caractérisé en ce que** les premier et deuxième segments de bords (10, 11) sont voisins l'un de l'autre.

7. Capteur de température selon la revendication 5 ou la revendication 6, **caractérisé en ce que** l'extension (16, 17) d'au moins un des conducteurs (8, 9) forme un angle, notamment un angle droit ou un angle proche d'un angle droit, avec le segment en question du conducteur (8, 9), lequel se situe sur la face donnée du support (1) sur laquelle il est soudé avec la couche de contact (6, 7).

8. Capteur de température selon l'une des revendications précédentes, **caractérisé en ce qu'**au moins une des extensions (16, 17) est repliée de manière à ce qu'elle encercle le bord du support (1).

9. Capteur de température selon l'une des revendications 1, 2 et 4 à 7, **caractérisé en ce qu'**au moins une des extensions (16, 17) est repliée de manière à ce qu'elle repose sur elle-même et touche le deuxième segment de bord (11) du support (1) avec son extrémité.

10. Capteur de température selon la revendication 9, **caractérisé en ce que** l'extension ou les extensions (16, 17) est soudée, respectivement, sont soudées, avec elles même.

11. Capteur de température selon la revendication 9 ou la revendication 10, **caractérisé en ce que** le bord du support (1) a une contre-dépouille sur le deuxième segment de bord (11) où il est touché par l'extrémité d'une extension (16, 17) repliée.

12. Capteur de température selon la revendication 11, **caractérisé en ce que** la contre-dépouille est un biseau.

13. Capteur de température selon l'une des revendications précédentes, **caractérisé en ce que** les extensions (16, 17) des deux conducteurs électriques (8, 9) sont repliées de la même manière et reliées avec le support (1).

14. Capteur de température selon l'une des revendications précédentes, **caractérisé en ce que** les conducteurs (8, 9) sont des bandes de tôle d'épaisseurs constante.

15. Capteur de température selon l'une des revendications précédentes, **caractérisé en ce que** la couche de résistance (3) est constituée d'un métal doté d'une courbe caractéristique résistance-température linéaire, comme, par exemple, le platine, ou est constituée d'un matériau semi-conducteur PTC ou NTC.

16. Capteur de température selon l'une des revendications précédentes, **caractérisé en ce que** les deux conducteurs (8, 9) sont incorporés au voisinage du premier segment de bord (10) du support (1) ou sur le premier segment de bord (10) de manière adjacente, ensemble dans un corps (14) électriquement isolant.

17. Capteur de température selon la revendication 16, **caractérisé en ce que** le corps (14) isolant a une extension (21) qui se situe sur la face (20) en question du support (1), laquelle est opposée aux couches de contact (6, 7) reliées avec les conducteurs (8, 9).
